**Europäisches Patentamt**

**European Patent Office**

**Office européen des brevets**

(11) Veröffentlichungsnummer : **0 233 227**
**B1**

## (12) EUROPÄISCHE PATENTSCHRIFT

(45) Veröffentlichungstag der Patentschrift :
28.06.89

(51) Int. Cl.⁴ : **D 06 C 3/02**

(21) Anmeldenummer : **86904781.1**

(22) Anmeldetag : **12.08.86**

(86) Internationale Anmeldenummer :
**PCT/DE 86/00325**

(87) Internationale Veröffentlichungsnummer :
**WO/8701147 (26.02.87 Gazette 87/05)**

(54) SPANNRAHMENKETTE.

(30) Priorität : 20.08.85 DE 3529683

(43) Veröffentlichungstag der Anmeldung :
26.08.87 Patentblatt 87/35

(45) Bekanntmachung des Hinweises auf die Patenterteilung : 28.06.89 Patentblatt 89/26

(84) Benannte Vertragsstaaten :
DE FR GB IT

(56) Entgegenhaltungen :
DE—A— 1 809 365
DE—A— 1 929 971
DE—A— 3 333 938

(73) Patentinhaber : A. Monforts GmbH & Co
Schwalmstrasse 301
D-4050 Mönchengladbach 2 (DE)

(72) Erfinder : FREIBERG, Helge
Dr.-Carl-Goerdeler-Strasse 12
D-4050 Mönchengladbach 4 (DE)

(74) Vertreter : von Creytz, Dietrich, Dipl.-Phys.
Tannenweg 25
D-5144 Wegberg-Beeck (DE)

## Beschreibung

Die Erfindung betrifft eine Spannrahmenkette zum kontinuierlichen Führen und/oder Breitstrecken einer textilen Stoffbahn in einer Stoffbahnspannmaschine mit jeweils aus einer zu einem Kettenglied gehörenden Buchse und einem durch Bohrungen eines Nachbarkettengliedes sowie die Buchse gesteckten, nadelgelagerten Gelenkbolzen bestehenden Kettenverbindung mit außen um die Buchse gelagerter Kettenradrolle zum Abrollen des Kettenglieds an an den Maschinenlängsenden vorgesehenen Kettenrädern, wobei die Buchse zugleich den Außenring des Nadellagers zwischen Gelenkbolzen und Buchse sowie den Innenring des Lagers zwischen Buchse und Kettenradrolle bildet.

Eine solche Transportkette für eine Stoffbahnspannmaschine wird in dem DE-GM 17 09 404 und in der DE-OS 33 33 938 beschrieben. Im Bekannten wird vorgesehen, an den beiden konzentrischen Lagerstellen Nadellager einzusetzen, die mit einer Dauerschmierung zu versehen sind. Die auf dem Gelenkbolzen nadelgelagerte Kettenradrolle (auch Schronrolle oder Hülse) dient lediglich dazu, die Reibungskräfte zwischen Kette und den an den Maschinenlängsenden vorgesehenen Kettenrädern auszugleichen.

Zum Aufnehmen und Übertragen der auf die zu behandelnde Stoffbahn auszuübenden horizontalen Spannkräfte — also zum Ausführen der eigentlichen Aufgabe der Kette — werden nach der DE-OS 33 33 938 Gleitelemente vorgesehen, die an einer Gleitschiene abgestützt sind. In der Praxis werden anstelle der Gleitanordnung aber im allgemeinen Laufrollen an der Kette angebracht, die an einer maschinenfesten Laufschiene abrollen, um die horizontalen Spannkräfte aufzunehmen.

Da die Nadellager zwischen dem Gelenkbolzen und der Buchse einerseits sowie zwischen der Buchse und der Kettenradrolle andererseits bei Betrieb der bekannten Kette nur den sehr geringen Bewegungen für den kleinen Knickwinkel im Bereich des Kettenumlenkrades unterliegen, wird das in den bekannten Nadellagern eingesetzte Dauerschmiermittel praktisch nicht verschlissen. Gegebenenfalls muß jedoch das Lager einer den horizontalen Spannkräften zugeordneten Laufrolle erhebliche Bewegungen und Kräfte aufnehmen, da die Laufrolle bei Betrieb der Kette ständig rotiert. Die Lebensdauer bzw. Periode der Nachschmierung hängt dann vor allem von dem Schmiermittelvorrat in dem Lager der Laufrolle ab.

Der Erfindung liegt die Aufgabe zugrunde, die Lebensdauer bzw. Nachschmierperiode des Lagers der Laufrolle den entsprechenden Werten des Lagers des Gelenkbolzens anzupassen und den Aufbau des Kettenglieds zu vereinfachen. Die erfindungsgemäße Lösung besteht bei der Spannrahmenkette eingangs genannter Art darin, daß die Kettenradrolle als eine zum Aufnehmen und Übertragen horizontaler Spannkräfte an eine Laufschiene vorgesehene Laufrolle ausgebildet und unmittelbar auf der als Kugellagerinnenring ausgebildeten Buchse kugelgelagert ist und daß von einer als Schmiermittelzufuhr dienenden, axialen Bohrung des Gelenkbolzens etwa radial ausgehende Schmiermittelkanäle zum Nadellager und durch dieses sowie die Wandung der Buchse hindurch zum Kugellager der Laufrolle führen. Vorzugsweise sollen die radialen Schmiermittelkanäle der Buchse in Richtung etwa quer zur Richtung der Längsbelastung der Kette liegen.

Durch die Erfindung werden die Funktionen von Kettenrad- bzw. Schonrolle einerseits und Laufrolle andererseits bekannter Kettenglieder in einem einzigen Element zusammengefaßt. Die erfindungsgemäße Laufrolle dient also sowohl dazu, die auf die zu behandelnde Stoffbahn ausgeübten horizontalen Spannkräfte auf den Maschinenkörper zu übertragen als auch dazu, die Kettenlängsspannung an den Umlenkrädern auf die Kettenräder zu übertragen. Zugleich wird durch die große Aufnahmefähigkeit und Stabilität des Kugellagers der Laufrolle erreicht, daß Lebensdauer bzw. Nachschmierperiode des Laufrollenlagers in etwa den entsprechenden Werten des (inneren) Gelenkbolzenlagers anzupassen sind. Da das Nadellager des Gelenkbolzens bisher eine wesentlich größere Lebensdauer bzw. Nachschmierperiode als das Laufrollenlager hat, wird die Nachschmierperiode der gesamten Kette entsprechend erhöht.

Anhand der schematischen Darstellung eines Ausführungsbeispiels werden Einzelheiten der Erfindung erläutert.

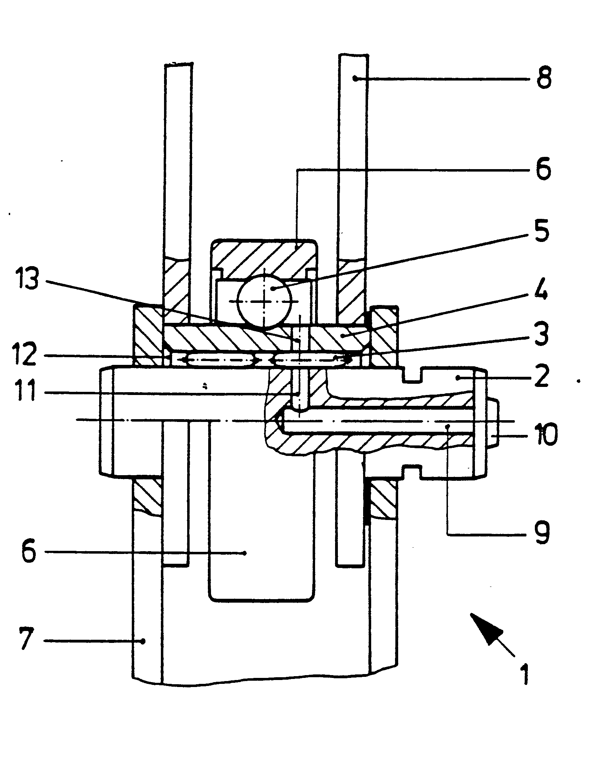

Das in der Zeichnung insgesamt mit 1 bezeichnete Kettenlager enthält einen Gelenkbolzen 2, eine auf dem Gelenkbolzen mit Hilfe eines Nadellagers 3 gelagerten Buchse 4 und eine auf der Buchse 4 in einem Kugellager 5 gelagerte Laufrolle 6. Mit dem Gelenkbolzen 2 sind zwei Außenlaschen mit dem einen Ende paarweise fest verbunden. Das jeweils andere Ende der Außenlaschen 7 wird mit dem Gelenkbolzen des auf der einen Seite benachbarten Kettenlagers fest verbunden. Zu dem auf der anderen Seite des Kettenlagers 1 benachbarten Kettenlager führen Innenlaschen 8, die paarweise mit der Buchse 4 fest verbunden sind. An den Außenlaschen 7 werden im allgemeinen Mittel, z. B. Kluppen- oder Nadelleisten, zum Erfassen des Randes der zu behandelnden Stoffbahn verbunden. Außerdem können an den Außenlaschen 7 Gleitelemente oder dergleichen zum Abstützen der Transportkette an wenigstens einer das Gewicht der Anordnung aufnehmenden ortsfesten Gleitschiene vorgesehen sein.

Die von der zu behandelnden Stoffbahn ausgeübten Querkräfte (im allgemeinen in horizontaler Richtung) werden über die Laufrolle 6 auf eine ortsfeste angeordnete Laufschiene übertragen. Die Laufrolle 6 wird über ein Kugellager 5 unmittelbar auf der Außenfläche der Buchse 4 gelagert. Zugleich dient die Innenfläche der Buchse 4 unmittelbar als Außenring des Nadellagers 3 des Gelenkbolzens 2.

Als Schmiermittelzuführung wird im Gelenkbolzen 2 eine axiale Bohrung 9 mit an einem Ende des Gelenkbolzens 2 angebrachten Schmiernippel 10 vorgesehen von der aus in radialer Richtung ein Schmiermittelkanal 11 zum Ringspalt 12 des Nadellagers 3 führt. Von dem Ringspalt 12 führt ein weiterer Kanal 13 zum Kugellager 5. Die radialen Schmiermittelkanäle 11 und 13 werden vorzugsweise um 90° versetzt angeordnet. Der Schmiermittelkanal 13 in der Buchse 4 soll in Richtung etwa quer zur Richtung der Längsbelastung des Kettenlagers 1 liegen.

Eine gesonderte, den Gelenkbolzen 2 umfassende Hülse zum Abrollen der Kette an den Kettenumlenkrädern ist nicht erforderlich, da die Laufrolle 6 auch die Funktion der bei bisherigen Ketten an dieser Stelle eingesetzten Hülse übernimmt.

## Patentansprüche

1. Spannrahmenkette zum kontinuierlichen Führen und/oder Breitstrecken einer textilen Stoffbahn in einer Stoffbahnspannmaschine mit jeweils aus einer zu einem Kettenglied gehörenden Buchse (4) und einem durch Bohrungen eines Nachbarkettengliedes sowie die Buchse gesteckten, nadelgelagerten Gelenkbolzen (2) bestehenden Kettenverbindung und mit außen um die Buchse (4) gelagerter Kettenradrolle zum Abrollen der Kettenglieder an an den Maschinenlängsenden vorgesehenen Kettenrädern, wobei die Buchse (4) zugleich den Außenring des Nadellagers (3) zwischen Gelenkbolzen (2) und Buchse (4) sowie den Innenring des Lagers zwischen Buchse und Kettenradrolle bildet, dadurch gekennzeichnet, daß die Kettenradrolle als eine zum Aufnehmen und Übertragen horizontaler Spannkräfte an eine Laufschiene vorgesehene Laufrolle (6) ausgebildet und auf der unmittelbar als Kugellagerinnenring dienenden Buchse (4) kugelgelagert ist und daß von einer als Schmiermittelzuführung dienenden axialen Bohrung (9) des Gelenkbolzens (2) etwa radial ausgehende Schmiermittelkanäle (11, 13) zum Nadellager (3) und durch dieses sowie die Wandung der Buchse (4) hindurch zum Kugellager (5) der Laufrolle (6) führen.

2. Spannrahmenkette nach Anspruch 1, dadurch gekennzeichnet, daß der radiale Schmiermittelkanal (13) der Buchse (4) in Richtung quer zur Richtung der Längszugbelastung des Kettenlagers (1) liegt.

## Claims

1. Tentering frame chain for the continuous guidance and/or stretching in width of a fabric web in a web tentering machine, having chain connection comprising a bushing (4) associated with a chain link and a hinge pin (2) seated in needle bearings and extending through bores of a neighboring link as well as through the bushing, and having a protective roller placed on the outside around the bushing (4) for the rolling movement of the chain links over chain wheels provided on the longitudinal ends of the machine, wherein the bushing (4) at the same time forms the outer race of the needle bearing (3) between the hinge pin (2) and bushing (4) as well as the inner race of the bearing between bushing and protective roller, characterized in that a roller (6) provided for the absorbing and transmitting horizontal clamping forces to a roller rail is supported on a ball bearing directly on the bushing (4) serving as the inner race of the ball bearing, and in that from an axial bore (9) of the hinge pin (2), serving as a lubricant supply line, approximately radially extending lubricant conduits (11, 13) lead to the needle bearing (3) and through it and the wall of the bushing (4) to the ball bearing (5) of the roller (6).

2. A tentering frame chain in accordance with claim 1, characterized in that the radial lubricant conduit (13) of the bushing (4) extends in a crosswise direction to the direction of the longitudinal tensile load of the chain bearing (1).

## Revendications

1. Chaîne de rame pour l'entraînement en continue et/ou l'égalisation d'un pan de tissu textile dans une rameuse de tissus avec comme connexion une douille (4) correspondant à chaque chaînon ainsi qu'un axe d'articulation (2) monté sur un roulement à aiguilles et passé aussi bien à travers des trous forés dans un maillon avoisiné qu'à travers la douille et avec une poulie de protection placée extérieurement autour de la douille (4) permettant le déroulement des chaînons sur les barbotins prévus aux bouts longitudinaux de la machine, la douille (4) formant en même temps l'anneau extérieur du roulement à aiguilles (3) entre l'axe d'articulation (2) et la douille (4) ainsi que l'anneau intérieur du roulement entre la douille et la poulie de protection, caractérisée en ce que la poulie de protection forme une poulie de roulement (6), apte à recevoir et à transmettre des forces de tension horizontales à un rail de roulement, est fixée directement sur la douille (4) au moyen d'un roulement à billes auquel la douille sert d'anneau intérieur, et que d'un perçage axial (9) de l'axe d'articulation (2), servant d'alimentation en lubrifiant, partent plus ou moins radialement des conduits de lubrifiant (11, 13) vers le roulement à aiguilles (3) et, à travers celui-ci et à travers la paroi de la douille (4), au roulement à billes (5) de la poulie (6).

2. Chaîne de rame selon la revendication 1, caractérisée en ce que le conduit de lubrifiant radial (13) de la douille (4) se situe en direction transversale à la direction de la charge de traction axiale (1).